# EUROPÄISCHE PATENTSCHRIFT

(11) **EP 3 530 855 B1**
(45) Veröffentlichungstag und Bekanntmachung des Hinweises auf die Patenterteilung: **18.10.2023**
(21) Anmeldenummer: 19158496.0
(22) Anmeldetag: 21.02.2019
(51) Int. Cl.: G01V 8/20, E05F 15/40, E05F 15/665, E05F 15/668

(54) **TORANLAGE**
GATE SYSTEM
INSTALLATION DE PORTE

(30) Priorität: 26.02.2018 DE 102018104314
(43) Veröffentlichungstag der Anmeldung: 28.08.2019
(73) Patentinhaber: Marantec Antriebs- und Steuerungstechnik GmbH & Co. KG, 33428 Marienfeld (DE)
(72) Erfinder: Hornschuh, Marc, 49326 Melle (DE); Schwetje, Michael, 33154 Salzkotten (DE); Hörmann, Michael, 33790 Halle/Westfalen (DE)
(74) Vertreter: Laufhütte, Dieter

(56) Entgegenhaltungen:
- EP-A1- 2 586 959
- EP-A2- 2 374 985
- DE-A1- 19 739 543

## Beschreibung

Die vorliegende Erfindung betrifft eine Toranlage, beispielsweise ein Garagentor, eine Industrietoranlage oder dergleichen, bei der zur Absicherung des Verfahrwegs des Tors mindestens ein Lichtschrankenelement zum Einsatz kommt, das einen freien Weg für das Tor sicherstellen soll.

Aus dem Stand der Technik ist es bekannt stangenförmige Lichtgitter vorzusehen, z.B. aus DE 197 39 543 bzw. aus EP 2 374 985.

So wird bei einem von oben herabfahrbaren Tor an beiden Seiten oder an einer Seite des Tores ein etwa vertikal ausgerichtetes Lichtgitter dazu verwendet, um zu überprüfen, ob im Verfahrweg des Tores ein Hindernis vorhanden ist. Ist dem so, wird einer Torsteuereinheit mitgeteilt, dass ein Schließen des Tores aufgrund des Vorhandenseins des Hindernisses im Verfahrweg derzeit nicht möglich ist. Aus dem Stand der Technik bekannte Lichtgitter stellen dabei mehrere fest zueinander angeordnete Lichtschrankenelemente dar, die in eine Stange eingebracht und dort fest vergossen sind. Typischerweise werden diese Stangen links und rechts von einem nach unten in Schließrichtung verfahrbaren Tores ausgerichtet und befestigt.

Nachteilhaft dabei ist, dass diese Stangen aufgrund unterschiedlicher Anforderungen typischerweise bis zu drei Meter lang sein müssen. So ist bei Industrietoranlagen, die bspw. von Gabelstaplern durchfahren werden, die Länge des erforderlichen Lichtgitters rechtlich vorgegeben Insbesondere bei solchen Stangen ist dann der Versand problematisch, was oftmals dazu führt, dass ein beträchtlicher Teil dieser Stangen das Ziel nur beschädigt erreicht.

Auch ist die Montage in den meisten Fällen sehr aufwendig, da die Stangen dicht am Torprofil auf einer Seite anzubringen sind. Aufgrund baulicher Eigenheiten ist dies jedoch nicht immer möglich, sodass oftmals Hilfskonstruktionen erstellt werden oder die Lichtgitter in nicht optimaler Weise (beispielsweise zu weit vom Tor entfernt) angeordnet werden. Auch kann es nach einem Anbringen der in Stangenform vorliegenden Lichtgitter erforderlich sein, dass eine auf einer Seite angeordnete Emitterstange, die mehrere Elemente zum Aussenden von Licht aufweist, zu ihrem Gegenstück, der Receiverstange, die ausgesandte Lichtstrahle aufnimmt, justiert werden muss. Gerade hinsichtlich der oben bereits kurz erwähnten typischerweise auftretenden Montageproblematik stellt dies eine sehr große Herausforderung dar.

Aber auch die Herstellung der Lichtgitter selbst ist sehr komplex. Die mehreren in einer Stange angeordneten Lichtschrankenelemente bedürfen einer exakten Ausrichtung zueinander, da ansonsten der gewünschte parallele Verlauf der ausgesandten Lichtstrahlen nicht gewährleistet ist. Zudem wird die in der Stange angeordnete Elektronik zum Schutz in den meisten Fällen mit einer großen Menge an Vergussmaterial versiegelt. Dies führt jedoch dazu, dass eine Reparatur der die Lichtschrankenelemente aufweisenden Stange nicht möglich ist, wenn beispielsweise nur ein einzelnes Element gestört ist. In der Regel wird dann das gesamte System ausgetauscht.

Zudem hat es sich als unvorteilhaft herausgestellt, dass die Anzahl und der Abstand der einzelnen in der Stange vergossenen Elemente nicht individuell für eine spezifische Toranlage anpassbar ist, es können nur die Abstände der in Serie gefertigten und so lieferbaren Lichtgitter gewählt werden. Versucht man als Hersteller nun den vielen verschiedenen unterschiedlichen Ansprüchen gerecht zu werden, führt dies unweigerlich dazu, dass eine große Anzahl an Varianten hergestellt und vorgehalten werden muss, wodurch sich die üblichen Nachteile hinsichtlich der Lagerung und Fertigung ergeben.

Auch für in Bogenform nach unten verfahrbare Torelemente einer Toranlage sind die in Stangenform verfügbaren Lichtgitter unpassend, da das Nachführen der Bogenform mithilfe der geradlinig verlaufenden Stangenelemente aufwendig und schwer zu realisieren ist.

Zusammenfassend ist auszuführen, dass die Herstellung und die Montage eines solchen Lichtgitters in der Regel eine bedeutende Ressourcenverschwendung mit sich bringt. Die aus Aluminium gefertigten Stangen weisen für die Montage der Elektronik ein beachtliches Maß an Vergussmasse auf, erfordern eine große Anzahl an Montagematerial sowie, aufgrund der beträchtliche Ausmaße und des empfindlichen Aufbaus, eine aufwändige Verpackung für den Versand. Ebenfalls muss, wie oben bereits gesagt, im Falle einer Reparatur typischerweise das Gesamtsystem getauscht werden.

Die oben aufgeführten Nachteile werden teilweise oder vollständig mit einer Toranlage überwunden, die sämtliche Merkmale des Anspruchs 1 aufweist.

Demnach umfasst die erfindungsgemäße Toranlage mindestens ein verfahrbares Torelement, mindestens eine Laufschiene zum Führen des Torelements, und mehrere Lichtschrankenelemente zum Detektieren eines freien Verfahrwegs der Torelements. Die Toranlage zeichnet sich dadurch aus, die ein Lichtgitter erzeugenden mehreren Lichtschrankenelemente voneinander separate Bauteile sind und die mindestens eine Laufschiene mehrere Aussparungen aufweist, in diesen jeweils ein Lichtschrankenelement befestigt ist, wobei die mehreren Lichtschrankenelemente überwiegend oder vollständig an der Seite der Laufschiene angeordnet sind, die dem Torelement abgewandt ist.

Dadurch ist es nicht mehr länger notwendig, ein neben die Laufschiene anzuordnendes stangenförmiges Lichtgitterelement anzuordnen. Vielmehr wird direkt in oder an die Laufschiene das Lichtschrankenelement vorgesehen. Vorteilhaft hieran ist, dass es nun keinen oder fast keinen räumlichen Versatz bei der Ausrichtung des mindestens einen Lichtschrankenelements zu dem tatsächlichen Verfahrweg des Torelements gibt. So wird also mit einer sehr viel größeren Wahrscheinlichkeit detektiert, ob ein störendes Hindernis im Verfahrweg des Torelements vorhanden ist oder nicht. Zudem wird durch das Vorsehen der Aussparung für das Lichtschrankenelement in der Laufschiene sichergestellt, dass auch ein nicht geradlinig verlaufender Verfahrweg des Torelements in der Laufschiene, beispielsweise ein bogenförmiger Verfahrweg, durch das Vorsehen mehrerer Lichtschrankenelemente an mehreren voneinander beabstandeten Aussparungen in der Laufschiene optimal entlang der Laufschiene abgedeckt werden kann. Ein mühsames Annähern an eine nicht geradlinig verlaufende Laufschiene durch das Zuschneiden von geradlinigen Lichtgittern in Stangenform kann somit unterbleiben.

Die Toranlage kann dabei eine beliebige Torausgestaltung annehmen, insbesondere ein Rolltor, ein Sektionaltor oder ein Rolltor.

Nach einer bevorzugten Variante der Erfindung ist die Aussparung in der mindestens einen Laufschiene ein Durchgangsloch, das sich durch die Laufschiene hindurch erstreckt. Sind mehrere Aussparungen in einer Laufschiene vorhanden, die zum Befestigen der Lichtschrankenelemente vorgesehen sind, so befinden sich diese in einer gemeinsamen Ebene. In anderen Worten kann also vorgesehen sein, dass der Normalenvektor der Aussparungsfläche bei allen Aussparungen parallel zueinander ist.

Erfindungsgemäß ist das mindestens eine Lichtschrankenelement überwiegend oder vollständig an der Seite der Laufschiene angeordnet, die dem Torelement abgewandt ist. Auf der dem Torelement zugewandten Seite der Laufschiene ist typischerweise nur begrenzt Raum vorhanden, der durch das Anordnen des Lichtschrankenelements genutzt werden könnte. Typischerweise sind die mit dem Torelement verbundenen Laufrollen in der Laufschiene geführt, sodass ein Anordnen des Lichtschrankenelements an der zum Torelement beziehungsweise der Laufrolle abgewandten Seite der Laufschiene von Vorteil ist. Nach einer weiteren optionalen Modifikation der vorliegenden Erfindung weist die mindestens eine Laufschiene entlang ihrer Länge mehrere Aussparungen zum Befestigen der Lichtschrankenelemente auf, wobei vorzugsweise die Aussparungen äquidistant zueinander angeordnet sind und/oder sich über die gesamte Länge der mindestens einen Laufschiene erstrecken. Dadurch ergeben sich Vorteile bei der Fertigung der Laufschiene, da unabhängig von der späteren Anbringung von Lichtschrankenelementen die Aussparungen in der Laufschiene vorgesehen werden. Bei Bedarf kann dann im Sinne einer modularen Erweiterung entschieden werden, dass die Lichtschrankenelemente in die dafür geeigneten Aussparungen beziehungsweise an die dafür geeigneten Aussparungen befestigt werden. Dem Fachmann ist klar, dass nicht jede in der Laufschiene vorhandene Aussparung zwangsläufig mit einem Lichtschrankenelement versehen werden muss, sondern natürlich auch nur einige wenige mit einem Lichtschrankenelement versehen werden können. So ist es bei manchen Toranlagen erforderlich, im Bodenbereich eine sehr hohe Dichte an Lichtschrankenelementen vorzusehen, die mit steigendem Abstand vom Boden jedoch nachlassen kann. So können dort im Bodenbereich auf ein bestimmtes Längenmaß mehrere Lichtschrankenelemente angeordnet sein, als in demselben Längenmaß in einem vom Boden entfernten Abschnitt der Laufschiene.

Erfindungsgemäß sind mehrere Lichtschrankenelemente vorgesehen, die an einer jeweiligen Aussparung der Laufschiene befestigt sind, um einen freien Verfahrweg des Torelements mittels eines Lichtgitters über einen größeren Abschnitt zu detektieren. Von der Erfindung ist demnach umfasst, dass mehrere Lichtschrankenelemente an der mindestens einen Laufschiene befestigt sind. Durch die mehreren Lichtschrankenelemente entsteht ein Lichtgitter, das den Verfahrweg des Torelements abdeckt.

Erfindungsgemäß sind die ein Lichtgitter erzeugenden mehreren Lichtschrankenelemente voneinander separate Bauteile, die vorzugsweise über eine Reinschaltung mit einem gemeinsamen Kabel verbunden sind.

Dadurch lässt sich eine besonders hohe Flexibilität bei der Schaffung des Lichtgitters erreichen, da nur an gewünschten Stellen in der Laufschiene - angepasst an die vorherrschenden Umstände - ein Lichtschrankenelement angeordnet und mit einem dazu angrenzenden Lichtschrankenelement der gleichen Laufschiene über ein Kabel in Reihe verbunden wird. So kann auf besonders einfache Art und Weise ein Lichtgitter erzeugt werden, da die voneinander separaten Lichtschrankenelemente je nach Bedarf an oder in den mehreren Aussparungen befestigt werden können und dann der Reihe nach an ein gemeinsames Kabel angeschlossen werden.

Dieses Kabel kann beispielsweise die zum Betrieb eines jeweiligen Lichtschrankenelements erforderliche Energie liefern und/oder eine Datenleitung enthalten die ein Auswerteergebnis einer jeweiligen Lichtschrankeneinheit übermittelt. So entsteht ein modular aufbaubares Lichtgitter, das variabel an die vorherrschenden Umstände anpassbar ist. Zudem kann vorgesehen sein, dass das Kabel mit einer Steuereinheit verbunden ist, die in Abhängigkeit der Detektionsergebnisse der mehreren verbundenen Lichtschrankenelemente die Toranlage steuert.

Bei einer weiteren optionalen Modifikation der vorliegenden Erfindung umfasst die Toranlage ferner eine zweite Laufschiene zum Führen des Torelements, wobei die erste Laufschiene und die zweite Laufschiene an verschiedenen Seiten des Torelements angeordnet sind und vorzugsweise eine zwischen den beiden Laufschienen gespannte Fläche eine mit dem mindestens einem Torelement abdeckbare Öffnung darstellt. So dienen die beiden Laufschienen also zum Führen des Torelements an den beiden Seiten des Torelements. Bei einem von oben nach unten verfahrbaren Torelement sind die beiden Laufschienen typischerweise geradlinig vom Boden abstehend angeordnet, können aber auch eine Bogenform aufweisen, typischerweise in einem vom Boden entfernten Abschnitt der Laufschiene. Dem Fachmann ist klar, dass die zweite Laufschiene im Wesentlichen die gleichen Merkmale aufweisen kann, wie sie vorstehend für die erste Laufschiene diskutiert worden sind.

Darüber hinaus ist jedes Lichtschrankenelement ein Sende-Lichtschrankenelement und/oder ein Empfangs-Lichtschrankenelement. Bei Vorhandensein von zwei Laufschienen an gegenüberliegenden Seiten des Torelements kann vorgesehen sein, dass an der Laufschiene der einen Seite nur Sende-Lichtschrankenelemente und an der Laufschiene der anderen Seite nur korrespondierende Empfangs-Lichtschrankenelemente vorhanden sind. Von der Erfindung ist aber auch der Fall umfasst, dass sowohl die Sende- als auch die Empfangsfunktion durch ein in einem einzelnen Gehäuse integriertes Lichtschrankenelement umgesetzt ist.

Nach einer weiteren Fortbildung der Erfindung kann vorgesehen sein, dass ein korrespondierendes Paar von Sende-Lichtschrankenelement und Empfangs-Lichtschrankenelement kodierte Signale verwendet, um nicht mit benachbarten Lichtschrankenelementen zu interferieren. Weiter kann vorgesehen sein, dass ein Empfangs-Lichtschrankenelement dazu ausgelegt ist, mehrere, unterschiedlich kodierte von einem Sende-Lichtschrankenelement ausgesandte Lichtimpulse zu empfangen. Dadurch wird in vorteilhafter Weise ein dichteres Lichtgitter erzeugt, da die einzelnen Streben des Lichtgitters nun nicht mehr nur zwischen einem Sende-Empfangspaar verlaufen, sondern von einem Empfangs-Lichtschrankenelement zu mehreren Sende-Lichtschrankenelementen verläuft.

Weiter kann nach einer optionalen Fortbildung der Erfindung vorgesehen sein, dass an einer gemeinsamen Seite des Torelements neben der ersten, vorderen Laufschiene eine weitere, hintere Laufschiene angeordnet ist, die beide zum Führen des mindestens einen Torelements dienen, und mindestens ein Lichtschrankenelement sowohl in der vorderen Laufschiene als auch in der hinteren Laufschiene angeordnet ist. Um einen bestimmten vorteilhaften Verfahrweg auszuführen, ist es von Vorteil, wenn ein Torelement beispielsweise an seiner unteren Kante in einer anderen Laufschiene geführt wird als die obere Kante des Torelements. Die beiden Laufschienen befinden sich dann typischerweise "hintereinander" und sind vorzugsweise weniger als 80cm, bevorzugterweise weniger als 50cm und besonders bevorzugterweise weniger als 30 cm voneinander beabstandet. Mit der vorliegenden Erfindung ist es möglich ein Lichtgitter vorzusehen, das von den Aussparungen der "vorderen" Laufschiene hin zu den Aussparungen der "hinteren" Laufschiene verläuft. Ein die Lichtschrankenelemente der hintereinander angeordneten Schiene verbindendes Kabel führt dann von einem Lichtschrankenelement, das mit der einen Laufschiene zusammenwirkt, zu einem Lichtschrankenelement, das mit der anderen Lauschiene zusammenwirkt. Die beiden vorstehend diskutierten Laufschienen können dabei im Wesentlichen die gleichen Merkmale aufweisen, wie sie vorstehend für die mindestens eine Laufschiene des Anspruchs 1 beschrieben worden sind.

Vorzugsweise verläuft die mindestens eine Laufschiene geradlinig und/oder weist einen bogenförmigen Abschnitt auf. Sämtliche der vorstehend beschriebenen Laufschienen können demnach geradlinig ausgeführt sein jedoch auch einen bogenförmigen Abschnitt aufweisen oder aus einem bogenförmigen Abschnitt bestehen. Auch eine Kombination mehrerer unterschiedlicher ausgeformter Abschnitte ist für die Laufschiene möglich.

Ferner kann nach einer weiteren Fortbildung der vorliegenden Erfindung vorgesehen sein, dass jedes Lichtschrankenelement über eine Rastnase verfügt, mit der das Lichtschrankenelement in der Aussparung der Laufschiene verrastbar ist, und/oder das mindestens eine Lichtschrankenelement einen Klemmdeckel aufweist, der dazu ausgelegt ist, ein Kabel, insbesondere ein mehradriges Flachkabel, gleichzeitig an dem Lichtschrankenelement zu klemmen und anzuschließen. Dabei kann vorgesehen sein, dass dieses Kabel dazu verwendet wird, die Reihenschaltung von mehreren an der Laufschiene angeordneten Lichtschrankenelemente umzusetzen.

Die vorliegende Erfindung betrifft ferner ein Verfahren zum Bestimmen der Torposition bei einer Toranlage, die nach einer der vorstehend diskutierten Varianten ausgebildet ist. Dabei umfasst das Verfahren die Schritte zum Erfassen des Zustands eines der Lichtschrankenelemente, wobei der Zustand entweder vom Torelement frei oder vom Torelement verdeckt einnehmen kann, wobei bei einem Zustandswechsel des Lichtschrankenelements die Anordnungsposition des Lichtschrankenelements mit der Schließkante des Torelements übereinstimmt und eine Torsteuerung auf Grundlage dieser Information die Torposition festlegt.

Nach einer Fortbildung des Verfahrens wird dann, wenn der Zustand des Lichtschrankenelements frei ist, das Torelement solange in Schließrichtung verfahren, bis der Zustand des Lichtschrankenelements wechselt, oder dann, wenn der Zustand des Lichtschrankenelements bedeckt ist, das Torelement solange in Öffnungsrichtung verfahren, bis der Zustand des Lichtschrankenelements wechselt, und beim Wechsel des Zustands die Anordnungsposition des Lichtschrankenelements mit der Schließkante des Torelements übereinstimmt und eine Torsteuerung auf Grundlage dieser Information die Torposition festlegt.

Nach einer weiteren Fortbildung kann vorgesehen sein, dass die Toranlage über ein erstes Lichtschrankenelement und ein zweites Lichtschrankenelement verfügt, wobei bei einem normalen Schließvorgang der Toranlage das zweite Lichtschrankenelement seinen Zustand vor dem ersten Lichtschrankenelement von frei nach bedeckt wechselt, und dann, wenn das erste und das zweite Lichtschrankenelement frei sind, das Torelement solange in Schließrichtung verfahren wird, bis der Zustand des zweiten Lichtschrankenelements wechselt, dann, wenn das erste und das zweite Lichtschrankenelement bedeckt sind, das Torelement solange in Öffnungsrichtung verfahren wird, bis der Zustand des ersten Lichtschrankenelements wechselt und dann, wenn das erste Lichtschrankenelement frei ist und das zweite Lichtschrankenelement bedeckt ist, das Torelement solange in Schließrichtung verfahren wird, bis der Zustand des ersten Lichtschrankenelements wechselt, oder das Torelement solange in Öffnungsrichtung verfahren wird, bis der Zustand des zweiten Lichtschrankenelements wechselt.

Weitere Merkmale, Vorteile und Einzelheiten der Erfindung werden anhand der nachfolgenden Figurenbeschreibung ersichtlich. Dabei zeigen:
- Fig. 1:: eine Teilansicht einer Toranlage mit einer Laufschiene und einem darin geführten Torelement,
- Fig. 2:: eine Teilansicht einer Toranlage, bei der die Laufschiene senkrecht zur Blattebene angeordnet ist,
- Fig. 3:: eine Vorder- und eine Seitenansicht einer Toranlage bei einem Montieren von Lichtschrankenelementen,
- Fig. 4:: eine Vorderansicht und eine Seitenansicht einer Toranlage mit montierten Lichtschrankenelementen,
- Fig. 5:: eine Seitenansicht einer Laufschiene für eine Toranlage in teilweise montiertem Zustand,
- Fig. 6:: eine bogenförmige Laufschiene in einer Seitenansicht mit Lichtschrankenelementen,
- Fig. 7:: eine Seitenansicht von zwei hintereinander angeordneten Laufschienen, wobei eine davon einen bogenförmigen Abschnitt aufweist und sich über die beiden Laufschienen ein Lichtgitter mit mehreren Lichtschrankenelementen erstreckt,
- Fig. 8:: eine Darstellung von zwei Laufschienen mit mehreren Lichtschrankenelementen,
- Fig. 9:: eine Prinzipskizze eines Lichtschrankenelements,
- Fig. 10:: eine Darstellung zum Erläutern einer Befestigungsmöglichkeit eines Lichtschrankenelements an einer Laufschiene,
- Fig. 11:: eine weitere Anordnungsmöglichkeit zum Befestigen des Lichtschrankenelements an der Laufschiene,
- Fig. 12:: ein Lichtschrankenelement, das an einer Laufschiene befestigt ist,
- Fig. 13:: ein in einer Aussparung der Laufschiene befestigtes Lichtschrankenelement, das mit einem Kabel verbunden ist,
- Fig. 14:: eine weitere Befestigungsalternative in einer Aussparung der Laufschiene für das Lichtschrankenelement, und
- Fig. 15:: das entsprechend der Alternative befestigte Lichtschrankenelement an der Aussparung der Laufschiene.

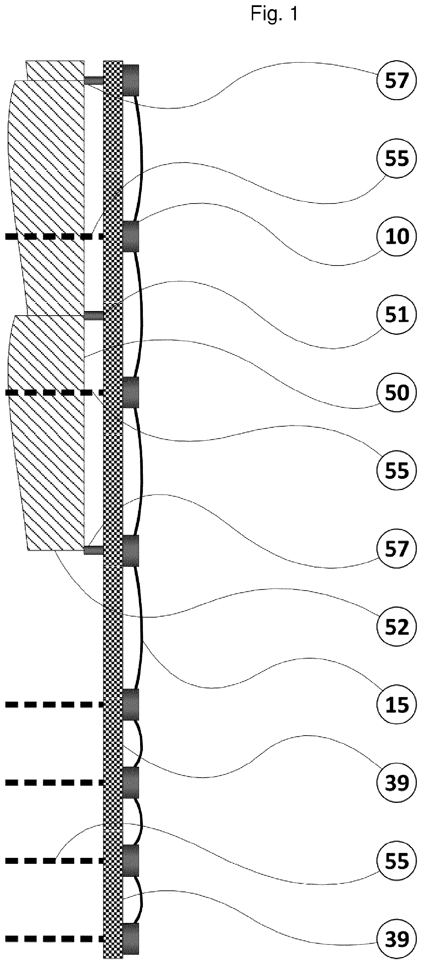

Fig. 1 zeigt eine Teilansicht einer erfindungsgemäßen Toranlage. Die Toranlage besitzt dabei eine Laufschiene 39, die in der Darstellung nach der Fig. 1 auf ihrer linken Seite ein Torsegment 50 (auch Torelement) führt. Die Führung des Torsegments 50 kann dabei in der Laufschiene 39 über Laufrollen 51 erfolgen, die in einem Profil der Laufschiene 39 aufgenommen sind. Auf der von dem Torsegment 50 abgewandten Seite der Laufschiene 39 sind mehrere einzelne Lichtschrankenelemente 10 angeordnet, die einen Lichtstrahl 55, 57 auf der zu dem Torsegment 50 zugewandten Seite der Laufschiene 39 emittieren. Die mehreren Lichtschrankenelemente 10 sind dabei in Reihe mit einem Flachbandkabel 15 miteinander verbunden, um jedes Lichtschrankenelement 10 mit Energie zu versorgen und, bei Bedarf, eine Datenleitung zu einer Steuereinheit zur Verfügung zu stellen. Wie aus Fig. 1 ferner ersichtlich ist, muss der Abstand der mehreren Lichtschrankenelemente 10 zueinander über die Länge der Laufschiene 39 hinweg nicht gleich sein, sondern kann variieren. Vorliegend ist in einem Bodenbereich der Laufschiene 39 der Abstand der Lichtschrankenelemente 10 zueinander geringer als in einem davon entfernten Abschnitt der Laufschiene 39.

Vorliegend ist eine mögliche Variante der Erfindung dargestellt, bei der das ausgesandte Licht eines Lichtschrankenelements 10 nur dann geblockt wird, wenn die Laufrolle 51 des Torsegments 50 auf Höhe eines jeweiligen Lichtschrankenelements 10 angeordnet ist. Nur dann kommt es zu einem Unterbrechen des Lichtstrahls 57, anderenfalls wird der Lichtstrahl 55 nicht geblockt. Von der Erfindung ist jedoch auch die Idee umfasst, dass der Lichtstrahl 55, 57 von dem Torsegment 50 geblockt wird, wenn sich dieses auf Höhe eines zugehörigen Lichtschrankenelements 10 befindet. Da jedoch die Torunterkante 52 eines Torsegments 50 typischerweise in ihrer Höhe mit der untersten Laufrolle 51 in der Laufschiene 39 korrespondiert, kann auch bei der nach Figur 1 umgesetzten Ausführung der Verfahrweg des Tores nachvollzogen werden.

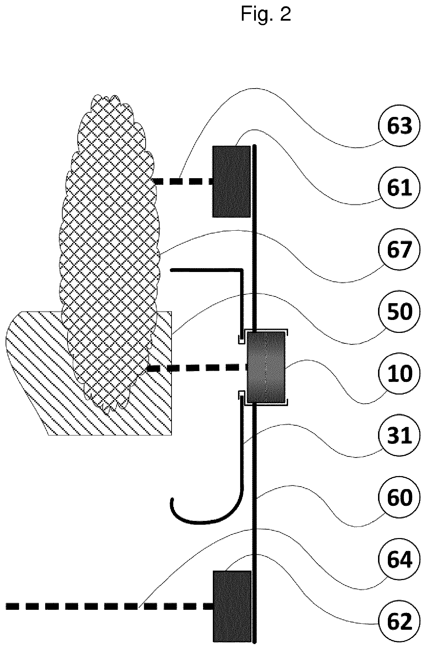

Fig. 2 zeigt eine Ansicht einer Toranlage, wenn man von unten auf ein herabfahrendes Torsegment 50 blickt. Dabei verläuft also die Laufschiene 31 für das Tor aus der Blattebene der Fig. 2 heraus. Zusätzlich zu den erfindungsgemäßen Lichtschrankenelement 10 sind auch herkömmliche Lichtgitter 61, 62 gezeigt, um die Vorteile der vorliegenden Erfindung einfach erläutern zu können. Herkömmliche Lichtgitter 61, 62, beziehungsweise Lichtschrankenelemente von herkömmlichen Lichtgittern 61, 62 lassen sich nicht direkt in der Laufschiene 31 für das Torsegment 50 montieren. So kann es beispielsweise vorkommen, dass aufgrund der seitlich versetzten Anordnung eines herkömmlichen Lichtgitters 61, 62 ein im Verfahrweg des Torsegments 50 angeordnetes Hindernis 67 nicht erkannt wird. Betrachtet man beispielsweise das Lichtgitter 62 mit dem davon ausgehenden Lichtstrahl 64 wird ersichtlich, dass das Hindernis 67 nicht erfasst wird. Verlässt sich nun eine Steuerung ausschließlich auf dieses Signal vom Lichtgitter 62 kommt es zu einer Kollision des Torsegments 50 mit dem Hindernis 67. Nur ein zufällig auf der richtigen Seite angeordnetes Lichtgitter 61 würde dabei das Hindernis 67 mit seinem unterbrochenen Lichtstrahl 63 erfassen. Die Wahrscheinlichkeit einer Detektion des Hindernisses 67 ist damit bedeutend geringer als mit der erfindungsgemäßen Umsetzung. Der Lichtstrahl des erfindungsgemäßen Lichtschrankenelements 10 verläuft dabei durch eine Aussparung und/oder senkrecht zu einer Aussparung der Laufschiene 31, in der das Torsegment 50 geführt ist. Ein im Verfahrweg des Torsegments 50 angeordnetes Hindernis 67 wird damit zuverlässig detektiert. Die über einen Halter 60 von der Laufschiene 31 beabstandeten herkömmlichen Lichtgitter 61, 62 können dies aufgrund ihrer versetzten Anordnung gegenüber der Laufschiene 31 nicht gewährleisten.

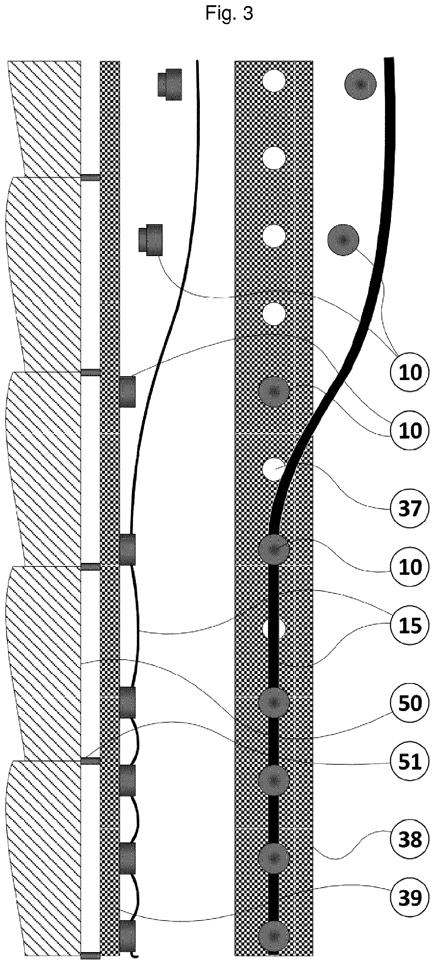

Fig. 3 zeigt auf der linken Seite eine Draufsicht auf einen Teil einer Toranlage, wohingegen der rechte Teil eine Seitenansicht darstellt. Die zueinander korrespondierenden Ansichten zeigen einen Montagevorgang der einzelnen Lichtschrankenelemente 10 an oder in einer Aussparung 37 der Laufschiene 39. Im Gegensatz zum Stand der Technik ist es nun nicht mehr notwendig, herkömmliche Lichtgitter aufwendig in der Nähe der Laufschiene zu montieren. Die Erfindung erlaubt vielmehr ein direktes Anbringen der einzelnen Lichtschrankenelemente 10 in Aussparungen 37 der Laufschiene 39. Nach einem Befestigen des Lichtschrankenelements 10 in einer zugehörigen Aussparung 37 werden die mehreren in den Aussparungen 37 angeordneten Lichtschrankenelemente mit einem gemeinsamen Kabel 15 der Reihe nach verbunden. Somit wird ein Lichtgitter gebildet, das je nach den Bedürfnissen des Einzelfalls einfach und vor Ort in oder an der Laufschiene 39 gebildet werden kann. Vorteilhaft hierbei ist, dass die Lichtschrankenelemente 10 einzeln lieferbar sind und individuell nach den jeweiligen Bedürfnissen einer spezifischen Toranlage in die dafür vorgesehenen Aussparungen 37 eingesteckt werden können. Die aus dem Stand der Technik bekannten Nachteile beim Vorsehen von Lichtgitter für Toranlagen entfallen damit komplett. Das Erstellen des erfindungsgemäßen Lichtgitters ist besonders einfach, da nach einem Anbringen der Lichtschrankenelemente 10 in den gewünschten Aussparungen 37 der Laufschiene 39 erst in einem nachgelagerten Arbeitsschritt die Verbindung mit dem Kabel 15 zwischen den verschiedenen Lichtschrankenelementen erstellt wird.

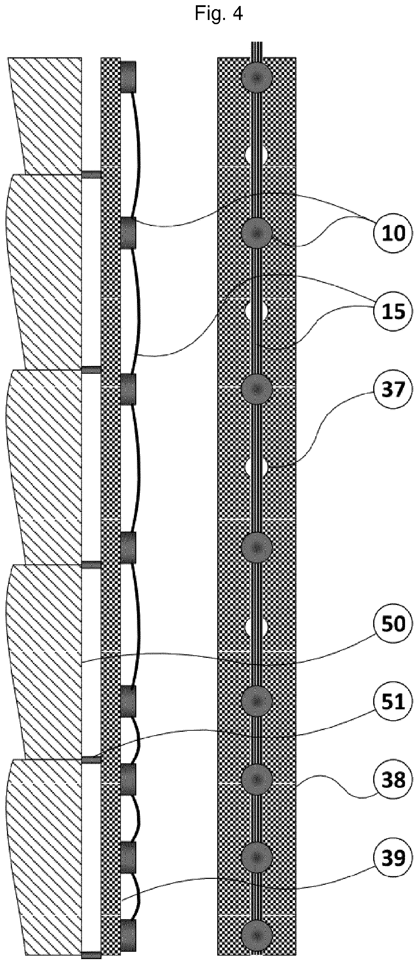

Fig. 4 zeigt eine ähnliche Darstellung wie Fig. 3, mit dem Unterschied, dass nun die Lichtschrankenelemente 10 in ihre zugehörigen Aussparungen 37 eingebracht sind beziehungsweise dort befestigt sind und mit einem Kabel 15 der Reihe nach verknüpft sind.

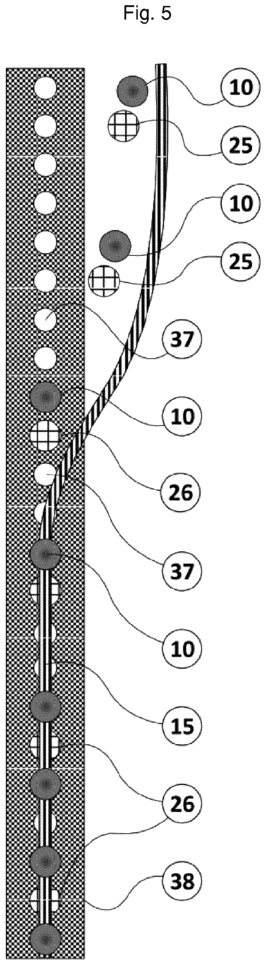

Fig. 5 zeigt eine Seitenansicht einer Laufschiene 39, die eine Vielzahl von Aussparungen 37, beispielsweise vorgestanzte Öffnungen der Laufschiene 38 aufweist. Es gibt Laufschienen 38 die von Herstellern bereits mit Befestigungsöffnungen 37 ausgeliefert werden, durch die Laufschienen 38 mit Montagematerial 25, 26 angeschraubt wird. Nach einer Fortbildung der vorliegenden Erfindung werden die Aussparungen 37 in kleineren Abständen angeordneten als es für eine Befestigung der Laufschiene 38 erforderlich wäre (beispielsweise in einem Abstand von 10cm statt 40cm). Damit ist es nun möglich, dass entweder Montagematerial 25, 26 oder ein Lichtschrankenelement mit der Aussparung 37 zusammenwirkt. Hierdurch wird der Fertigungsprozess des Torherstellers beim Herstellen der Laufschiene 38 erheblich vereinfacht und der Kunde kann die Lichtschrankenelemente 10 sehr flexibel einsetzen. Die Aussparungen dienen demnach nicht nur zum Aufnehmen beziehungsweise zum Befestigen eines Lichtschrankenelements 10 sondern auch zum Zusammenwirken mit einem Befestigungsmittel 25, 26, das zum Montieren der Laufschiene 38 selbst dient.

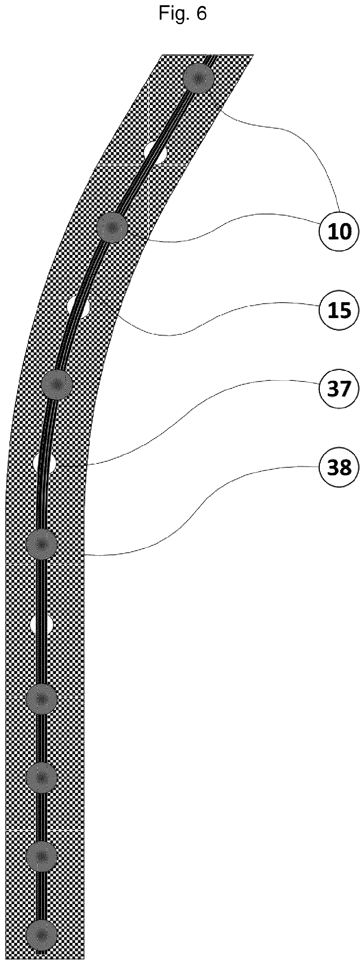

Fig. 6 zeigt eine Seitenansicht einer im oberen Abschnitt bogenförmigen Laufschiene 38, die mit einem Lichtgitter nach der Erfindung versehen ist. Vorteilhaft hieran ist, dass herkömmlicherweise die meisten Lichtschranken in gerader Stangenform geliefert werden und sich demnach nicht der Biegung einer Tores bzw. der Laufschiene anpassen können. Erfindungsgemäß ist dies jedoch möglich, da durch die einzelnen Lichtschrankenelemente 10 und das Anordnen dieser an oder in den Aussparungen 37 der Laufschiene 38 ein beliebiger der Laufschiene nachverfolgbarer Verlauf des so gebildeten Lichtgitters möglich ist. Der Biegung der Laufschiene 38 kann somit optimal gefolgt werden. Größere Lücken, wie sie bei der stückweise geraden Anordnung herkömmlicher Lichtschrankenelemente entstehen, gibt es nicht mehr.

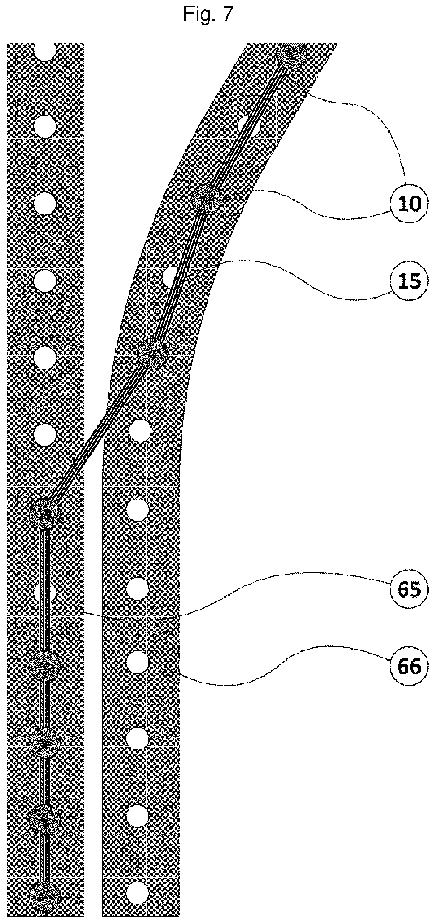

Fig. 7 zeigt eine Seitenansicht einer Toranlage, die über mehrere Laufschienen 65, 66 auf einer Seite der Toranlage verfügt. So gibt es eine vordere Laufschiene 65 und eine hintere Laufschiene 66, die jeweils mit einem Torsegment (nicht dargestellt) einer Toranlage zusammen wirken. Da es in vielen Konfigurationen von Toranlagen erforderlich ist zwei Laufschienen hintereinander anzuordnen, ist es auch vorteilhaft mit dem Lichtgitter zwischen den beiden Laufschienen zu wechseln. Bei herkömmlichen Lichtgittern ist dies nicht umsetzbar. Durch die vorliegende Erfindung ist es jedoch ohne Mehraufwand möglich, die Lichtschrankenelemente 10 beispielsweise von der vorderen Laufschiene 65 auf die hintere Laufschiene 66 zu verteilen, wodurch ein Lichtgitter erzeugt wird, dessen einzelne Lichtschrankenelemente sowohl in der einen als auch in der anderen Laufschiene angeordnet sind. Dadurch ist es möglich, die Lichtschrankenelemente 10 optimal auf die hintereinander angeordneten Laufschienen 65, 66 zu verteilen.

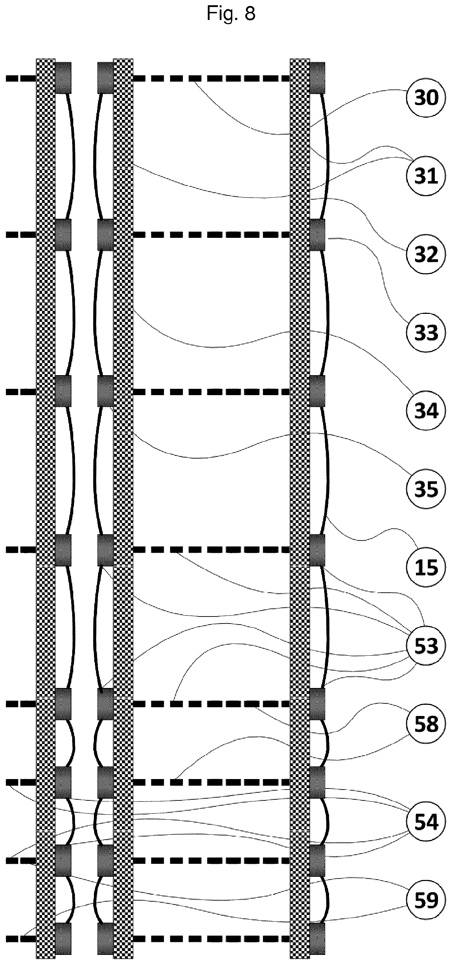

Fig. 8 zeigt zwei Laufschienen 31 eines ersten Tores sowie links davon eine weitere Laufschiene eines zweiten Tores. Dabei ist es möglich, dass in eine erste Laufschiene 32 Sende-Lichtschrankenelemente 33 angeordnet sind, die mit korrespondierenden Empfangs-Lichtschrankenelementen 35 der zweiten Laufschiene 34 korrespondieren. Es werden also auf einer Seite, beispielsweise der Laufschiene 32 nur Sende-Lichtschrankenelemente 31 und auf der anderen Seite, der Laufschiene 34, nur Empfangs-Lichtschrankenelemente 35 angeordnet. Ferner kann dabei vorgesehen sein, dass jedes Sende-Lichtschrankenelement 33 ein eindeutiges, kodiertes Signal aussendet, welches von dem korrespondierenden Empfangs-Lichtschrankenelement 35 eindeutig erkannt und ausgewertet wird. Ferner kann auch vorgesehen sein, dass nicht nur die Lichtstrahlen 58 eines ersten Lichtgitters 53 untereinander kodiert sind, sondern ebenfalls die Lichtstrahlen 58 des ersten Lichtgitters 53 gegenüber weiteren Lichtgittern 54 beziehungsweise den Lichtstrahlen 59 von anderen Lichtgittern kodiert sind. So kann es nicht zu einer Fehldetektion kommen, wenn Tore knapp nebeneinander angeordnet sind.

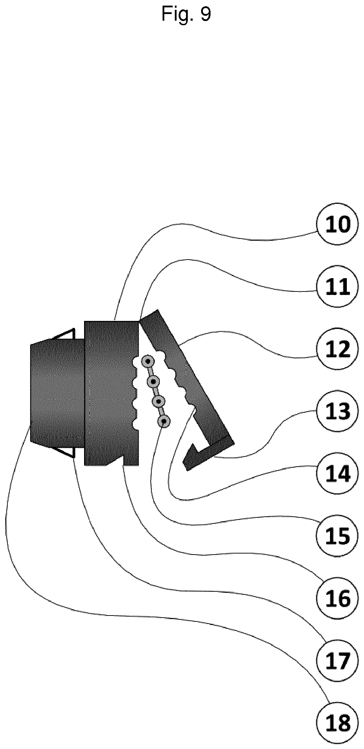

Fig. 9 zeigt eine mögliche Ausführung des Lichtschrankenelements 10, das auf besonders einfache Art und Weise mit der Aussparung 37 einer Laufschiene 38, 39 zusammenwirken kann. Dabei verfügt das Lichtschrankenelement 10 über einen Deckel 12, der mit dem Hauptgehäuse des Lichtschrankenelements über ein Scharnier 11, das angegossen sein kann, verbunden ist. Der Deckel 12 besitzt dabei an seinem vom Scharnier 11 entfernten Abschnitt einen Haken 13 für die Deckelverriegelung. Am Hauptbestandteil des Lichtschrankenelements 10 ist eine entsprechende Raste 16 für den Deckelhaken 13 vorhanden. In einem geschlossenen Zustand des Deckels gibt es eine Aufnahme 14 für ein Flachbandkabel 15, sodass in einem verrasteten Zustand des Deckels 12 ein in der Aufnahme befindliches Flachbandkabel 15 darin befestigt und auch kontaktiert mit dem Lichtschrankenelement 10 ist. In der Aufnahme 14 gibt es demnach Kontaktstifte, die bei einem Verrasten des Deckels 12 in das Flachbandkabel 15 eindringen und die entsprechende Ader oder auch mehrere Adern des Flachbandkabels 15 kontaktieren. Dadurch ist ein besonders einfach und schnelles Verbinden der voneinander beabstandet angeordneten Lichtschrankenelemente 10 möglich. An einem vom Deckelabschnitt beabstandeten Abschnitt des Lichtschrankenelements 10 befindet sich das sogenannte Unterteil 18, das von einer Seite der Laufschiene eingeführt wird und an der anderen Seite der Laufschiene herausragt. Für eine möglichst einfache Verbindung mit der Aussparung der Laufschiene ist dort ebenfalls ein Rastelement 17 vorgesehen, das für ein Verrasten des Lichtschrankenelements 10 mit einer Aussparung der Laufschiene genutzt wird.

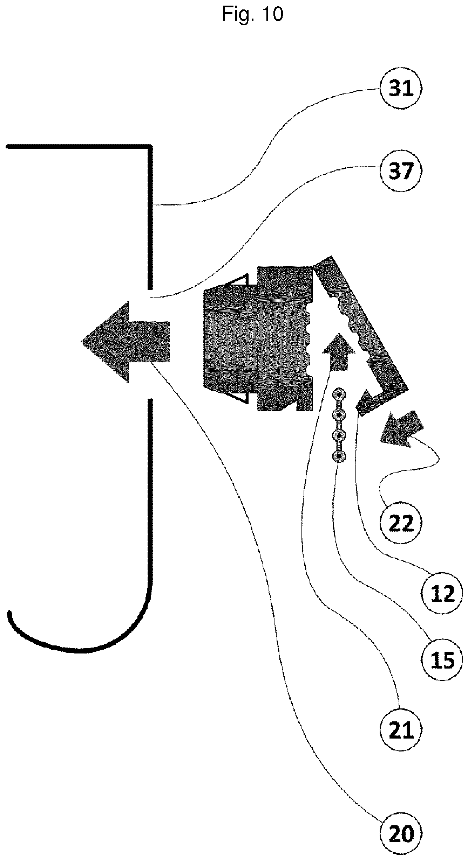

Fig. 10 zeigt eine etwas detailliertere Umsetzung der Montage des Lichtschrankenelements an der Laufschiene 31 einer Toranlage. Die Pfeile stellen dabei Arbeitsschritte dar, bei denen eine vorteilhafte Ausführungsreihenfolge im Folgenden wiedergegeben wird. In einem ersten Schritt 20 ist das Lichtschrankenelement 10 mit der Laufschiene 31 zu verbinden, indem die Rastnasen des Unterteils des Lichtschrankenelements in die dafür vorgesehen Öffnung 37 der Laufschiene 31 eingerastet wird. In einem zweiten Schritt 21 wird dann das Flachbandkabel 15 in den Aufnahmeabschnitt des Lichtschrankenelements eingelegt, bevor in einem dritten Schritt 22 der Deckel 12 des Lichtschrankenelements 10 geschlossen wird und eine elektrische Verbindung zwischen dem Flachbandkabel 15 und dem Lichtschrankenelement 10 herstellt.

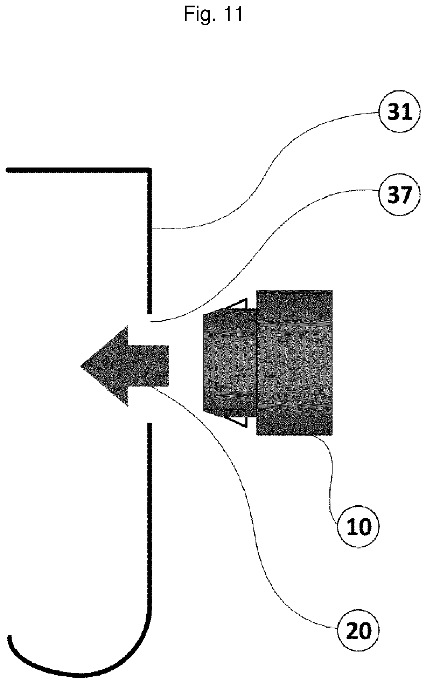

Fig. 11 zeigt erneut den ersten Arbeitsschritt 20, bei dem das Lichtschrankenelement 10 in die Öffnung 37 der Laufschiene 31 eingerastet wird.

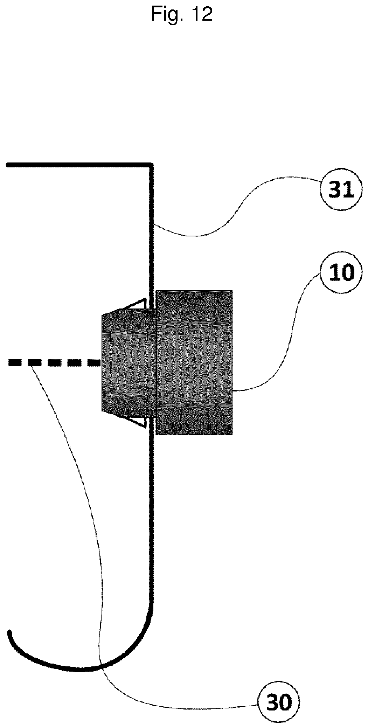

Fig. 12 zeigt das Lichtschrankenelement 10 in einer mit der Laufschiene 31 verbundenen Anordnungsposition, bei der der Lichtstrahl 30 von dem Lichtschrankenelement 10 ausgesendet wird. Man erkennt in dieser Darstellung, dass ein Großteil des Lichtschrankenelements an der vom Torelement abgewandten Seite der Laufschiene 31 angeordnet ist und ein räumlich kleinerer Teil des Lichtschrankenelements an der zum Torelement zugewandten Seite des Lichtschrankenelements 31 vorhanden ist. Dies liegt typischerweise darin begründet, dass die Laufschiene 31 nicht viel Platz bietet für das Anordnen des Lichtschrankenelements 10, da die in der Laufschiene 31 geführte Laufrolle viel Platz beansprucht.

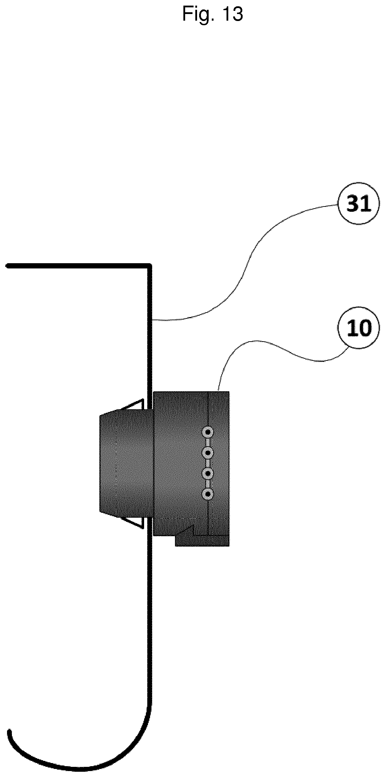

Fig. 13 zeigt das Lichtschrankenelement 10 in einer in der Aussparung der Laufschiene 31 angeordneten Position, wobei nun der Deckel des Lichtschrankenelements 10 in einer geschlossenen Position ist, wodurch das geklemmte Flachbandkabel in einer elektrischen Verbindung mit dem Lichtschrankenelement 10 steht.

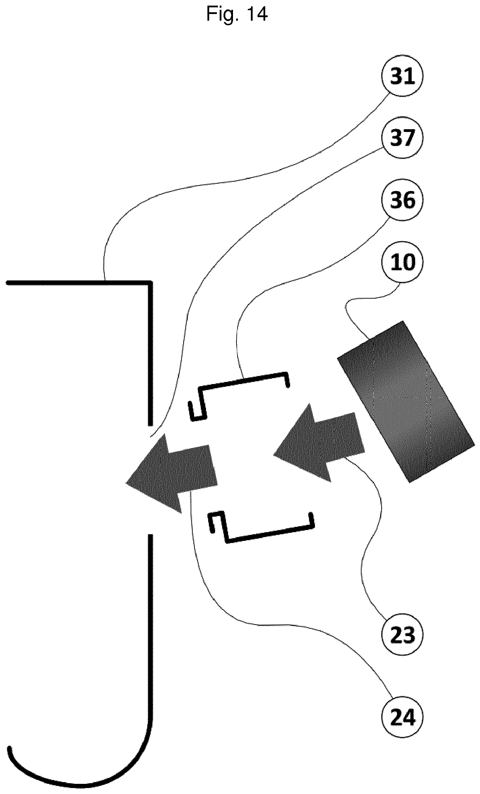

Fig. 14 zeigt eine weitere Möglichkeit zum Befestigen des Lichtschrankenelements 10 an der Aussparung 37. Dem Fachmann ist klar, dass die Lichtschrankenelemente 10 nicht nur in, sondern auch an der Aussparung beziehungsweise dem Profil der Laufschiene 31 befestigbar sind. Dies ist beispielsweise über die dargestellte Halterung 36 für das Lichtschrankenelement 10 möglich. Erneut werden die Pfeile mit Arbeitsschritten in Verbindung gebracht, wobei eine vorteilhafte Ausführungsreihenfolge dieser Schritte nachfolgend dargelegt ist. Mit einem ersten Arbeitsschritt 23 wird das Lichtschrankenelement 10 in die Halterung 36 gedrückt. Anschließend wird die das Lichtschrankenelement 10 haltende Halterung 36 in die Aussparung 37, die eine vorgestanzte Öffnung der Laufschiene 31 sein kann, eingedrückt oder darin aufgehangen.

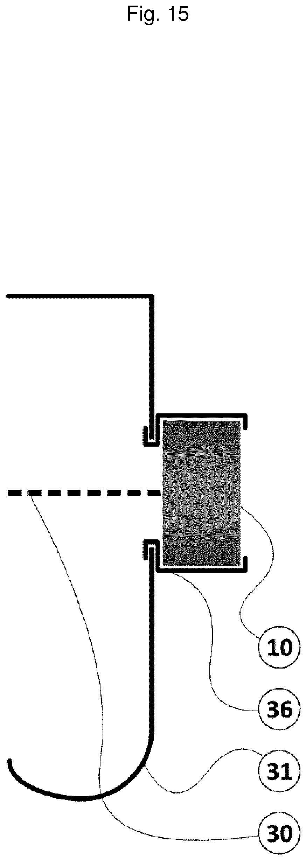

In Fig. 15 sieht man dann das Ergebnis eines über eine Halterung 36 an der Aussparung 37 befestigten Lichtschrankenelements 10. Der Lichtstrahl 10 dringt dann durch die Aussparung auf die Seite der Laufschiene 31, die dem Torelement (nicht dargestellt) zugewandt ist. In dieser Darstellung ist also das Lichtschrankenelement 10 vollständig hinter der Laufschiene 31 montiert, da beispielsweise auf der Seite zum Tor die Laufrollen nur sehr wenig Platz für die Anordnung des Sensors lassen.

## Patentansprüche

1. Toranlage, umfassend:
mindestens ein verfahrbares Torelement (50),
mindestens eine Laufschiene (31, 38, 39) zum Führen des Torelements (50), und
mehrere Lichtschrankenelemente (10) zum Detektieren eines freien Verfahrwegs des Torelements (50),
**dadurch gekennzeichnet, dass**
die ein Lichtgitter erzeugenden mehreren Lichtschrankenelemente (10) voneinander separate Bauteile sind und die mindestens eine Laufschiene (31, 38, 39) mehrere Aussparungen (37) aufweist, in diesen jeweils ein Lichtschrankenelement (10) befestigt ist, wobei die mehreren Lichtschrankenelemente (10) überwiegend oder vollständig an der Seite der Laufschiene (31, 38, 39) angeordnet sind, die dem Torelement (50) abgewandt ist.

2. Toranlage nach Anspruch 1, wobei die Aussparung (37) ein Durchgangsloch ist, das sich durch die mindestens eine Laufschiene (31, 38, 39) hindurch erstreckt.

3. Toranlage nach einem der vorhergehenden Ansprüche, wobei die mindestens eine Laufschiene (31, 38, 39) entlang ihrer Länge mehrere Aussparungen (37) zum Befestigen der Lichtschrankenelemente (10) aufweist, wobei vorzugsweise die Aussparungen (37) äquidistant zueinander angeordnet sind und/oder sich über die gesamte Länge der mindestens einen Laufschiene (31, 38, 39) erstrecken.

4. Toranlage nach Anspruch 3, wobei mehrere Lichtschrankenelemente (10) an einer jeweiligen Aussparung (37) der Laufschiene (31, 38, 39) befestigt sind, um einen freien Verfahrweg des Torelements (50) mittels eines Lichtgitters über einen größeren Abschnitt zu detektieren.

5. Toranlage nach einem der vorhergehenden Ansprüche, ferner umfassend eine zweite Laufschiene (34) zum Führen des Torelements (50), wobei die erste Laufschiene (32) und die zweite Laufschiene (34) an verschiedenen Seiten des Torelements (50) angeordnet sind und vorzugsweise eine zwischen den beiden Laufschienen (32, 34) gespannte Fläche eine mit dem mindestens einem Torelement (50) abdeckbare Öffnung darstellt.

6. Toranlage nach einem der vorhergehenden Ansprüche, wobei jedes Lichtschrankenelement (10) ein Sende-Lichtschrankenelement (33) und/oder ein Empfangs-Lichtschrankenelement (35) ist, und vorzugsweise, bei Vorhandensein von zwei Laufschienen (32, 34) an gegenüberliegenden Seiten des Torelements (50), an der Laufschiene (32) der einen Seite nur Sende-Lichtschrankenelemente (33) und an der Laufschiene (34) der anderen Seite nur korrespondierende Empfangs-Lichtschrankenelemente (35) vorhanden sind.

7. Toranlage nach Anspruch 6, wobei ein korrespondierendes Paar von Sende-Lichtschrankenelement (33) und Empfangs-Lichtschrankenelement (35) codierte Signale verwendet, um nicht mit benachbarten Lichtschrankenelementen (10) zu interferieren.

8. Toranlage nach einem der vorhergehenden Ansprüche, wobei
an einer gemeinsamen Seite des Torelements (50) neben der ersten, vorderen Laufschiene (65) eine weitere, hintere Laufschiene (66) angeordnet ist, die beide zum Führen des mindestens einen Torelements (50) dienen, und
mindestens ein Lichtschrankenelement (10) sowohl in der vorderen Laufschiene (65) als auch in der hinteren Laufschiene (66) angeordnet ist, wobei vorzugsweise
die Lichtschrankenelemente (10) der vorderen Laufschiene und der hinteren Laufschiene über ein gemeinsames Kabel verbunden sind.

9. Toranlage nach einem der vorhergehenden Ansprüche, wobei die mindestens eine Laufschiene (31, 38, 39) geradlinig verläuft und/oder einen bogenförmigen Abschnitt aufweist.

10. Toranlage nach einem der vorhergehenden Ansprüche, wobei jedes Lichtschrankenelement (10) über eine Rastnase verfügt, mit der das Lichtschrankenelement (10) in der Aussparung (37) der Laufschiene (31, 38, 39) verrastbar ist, und/oder
einen Klemmdeckel aufweist, der dazu ausgelegt ist, ein Kabel, insbesondere ein mehradriges Flachkabel, gleichzeitig an dem Lichtschrankelement zu klemmen und anzuschließen.

11. Verfahren zum Bestimmen der Torposition bei einer Toranlage nach einem der vorhergehenden Ansprüche, umfassend die Schritte:
Erfassen des Zustands eines der Lichtschrankenelemente (10), der entweder vom Torelement (50) frei oder vom Torelement (50) bedeckt einnehmen kann, wobei
bei einem Zustandswechsel des Lichtschrankenelements (10) die Anordnungsposition des Lichtschrankenelements (10) mit der Schließkante des Torelements (50) übereinstimmt und eine Torsteuerung auf Grundlage dieser Information die Torposition festlegt.

12. Verfahren nach Anspruch 11, wobei
dann, wenn der Zustand des Lichtschrankenelements (10) frei ist, das Torelement (50) so lange in Schließrichtung verfahren wird, bis der Zustand des Lichtschrankenelements (10) wechselt, oder
dann, wenn der Zustand des Lichtschrankenelements (10) bedeckt ist, das Torelement (50) so lange in Öffnungsrichtung verfahren wird, bis der Zustand des Lichtschrankenelements (10) wechselt, und
beim Wechsel des Zustands die Anordnungsposition des Lichtschrankenelements (10) mit der Schließkante des Torelements (50) übereinstimmt und eine Torsteuerung auf Grundlage dieser Information die Torposition festlegt.

13. Verfahren nach einem der Ansprüche 11 oder 12, wobei die Toranlage über ein erstes Lichtschrankenelement (10) und ein zweites Lichtschrankenelement (10) verfügt, wobei bei einem normalen Schließvorgang der Toranlage das zweite Lichtschrankenelement (10) seinen Zustand vor dem ersten Lichtschrankenelement (10) von frei nach bedeckt wechselt, und
dann, wenn das erste und das zweite Lichtschrankenelement (10) frei sind, das Torelement (50) so lange in Schließrichtung verfahren wird, bis der Zustand des zweiten Lichtschrankenelements (10) wechselt,
dann, wenn das erste und das zweite Lichtschrankenelement (10) bedeckt sind, das Torelement (50) so lange in Öffnungsrichtung verfahren wird, bis der Zustand des ersten Lichtschrankenelements (10) wechselt, und
dann, wenn das erste Lichtschrankenelement (10) frei ist und das zweite Lichtschrankenelement (10) bedeckt ist, das Torelement (50) so lange in Schließrichtung verfahren wird, bis der Zustand des ersten Lichtschrankenelements (10) wechselt, oder das Torelement (50) so lange in Öffnungsrichtung verfahren wird, bis der Zustand des zweiten Lichtschrankenelements (10) wechselt.

## Claims

1. Door system, comprising:
at least one displaceable door element (50),
at least one running rail (31, 38, 39) for guiding the door element (50), and several light barrier elements (10) for detecting a free travel path of the door element (50),
**characterized in that**
the plurality of light barrier elements (10) generating a light grid are components separate from one another and the at least one running rail (31, 38, 39) comprises a plurality of cut-outs (37), in each of which a light barrier element (10) is fixed, wherein the plurality of light barrier elements (10) are arranged predominantly or completely at the side of the running rail (31, 38, 39) facing away from the door element (50).

2. Door system according to claim 1, wherein the cut-out (37) is a through hole, which extends through the at least one running rail (31, 38, 39).

3. Door system according to any one of the preceding claims, wherein the at least one running rail (31, 38, 39) comprises a plurality of cut-outs (37) along its length for fastening the light barrier elements (10), wherein the cut-outs (37) are preferably arranged equidistant from one another and/or extend over the entire length of the at least one running rail (31, 38, 39).

4. Door system according to claim 3, wherein a plurality of light barrier elements (10) are fastened to a respective cut-out (37) of the running rail (31, 38, 39) for detecting a free path of movement of the door element (50) by means of a light grid over a larger cross-section.

5. Door system according to any of the preceding claims, further comprising a second running rail (34) for guiding the door element (50), wherein the first running rail (32) and the second running rail (34) are arranged on different sides of the door element (50), and preferably a surface spanned between the two running rails (32, 34) constitutes an opening which can be covered with the at least one door element (50).

6. Door system according to any of the preceding claims, wherein each light barrier element (10) is a sending light barrier element (33) and/or a receiving light barrier element (35), and preferably, if two running rails (32, 34) are present at opposite sides of the door element (50), only sending light barrier elements (33) are present on the running rail (32) at one side and only corresponding receiving light barrier elements (35) are present on the running rail (34) at the other side.

7. Door system of claim 6, wherein a corresponding pair of the sending light barrier element (33) and the receiving light barrier element (35) use coded signals in order not to interfere with adjacent light barrier elements (10).

8. Door system according to any of the preceding claims, wherein
a further rear running rail (66) is arranged next to the first front running rail (65) on a common side of the door element (50), both serving to guide the at least one door element (50), and
at least one light barrier element (10) is arranged both in the front running rail (65) and in the rear running rail (66), wherein preferably
the light barrier elements (10) of the front and rear running rail are connected via a common cable.

9. Door system according to any of the preceding claims, wherein the at least one running rail (31, 38, 39) extends rectilinearly and/or has an arcuate cross-section.

10. Door system according to any one of the preceding claims, wherein each light barrier element (10) comprises a latching lug, with which the light barrier element (10) can be latched into the cut-out (37) of the running rail (31, 38, 39), and/or
comprises a clamping cover, which is configured to clamp and connect a cable, in particular a multi-core ribbon cable, simultaneously to the light barrier element.

11. Method for defining the door position in a door system according to any of the preceding claims, comprising the steps:
detecting the state of one of the light barrier elements (10) that can be adopted either free of the door element (50) or covered by the door element (50), wherein
in the event of a change of state of the light barrier element (10), the arrangement position of the light barrier element (10) coincides with the closing edge of the door element (50), and a door controller sets the door position on the basis of this information.

12. Method according to claim 11, wherein
when the state of the light barrier element (10) is free, the door element (50) is moved in the closing direction until the state of the light barrier element (10) changes, or
when the state of the light barrier element (10) is covered, the door element (50) is moved in the opening direction until the state of the light barrier element (10) changes, and
when the state changes, the arrangement position of the light barrier element (10) coincides with the closing edge of the door element (50), and a door controller sets the door position on the basis of this information.

13. Method according to any one of claims 11 or 12, wherein the door system comprises a first light barrier element (10) and a second light barrier element (10), wherein during a normal closing process of the door system, the second light barrier element (10) changes its state from free to covered before the first light barrier element (10), and
when the first and second light barrier elements (10) are free, the door element (50) is moved in the closing direction until the state of the second light barrier element (10) changes,
when the first and second light barrier elements (10) are covered, the door element (50) is moved in the opening direction until the state of the first light barrier element (10) changes, and
when the first light barrier element (10) is free and the second light barrier element (10) is covered, the door element (50) is moved in the closing direction until the state of the first light barrier element (10) changes, or the door element (50) is moved in the opening direction until the state of the second light barrier element (10) changes.

## Revendications

1. Installation de porte comprenant :
au moins un élément de porte (50) pouvant être déplacé,
au moins un rail de roulement (31, 38, 39) destiné à guider l'élément de porte (50), et
plusieurs éléments de barrière lumineuse (10) destinés à détecter un trajet de déplacement libre de l'élément de porte (50),
**caractérisée en ce que**
les plusieurs éléments de barrière lumineuse (10) générant une grille lumineuse sont des composants séparés les uns des autres et l'au moins un rail de roulement (31, 38, 39) présente plusieurs évidements (37), dans lesquels respectivement un élément de barrière lumineuse (10) est fixé, dans laquelle les plusieurs éléments de barrière lumineuse (10) sont disposés majoritairement ou totalement sur le côté du rail de roulement (31, 38, 39), qui est opposé à l'élément de porte (50).

2. Installation de porte selon la revendication 1, dans laquelle l'évidement (37) est un trou traversant, qui s'étend à travers l'au moins un rail de roulement (31, 38, 39) de part en part.

3. Installation de porte selon l'une quelconque des revendications précédentes, dans laquelle l'au moins un rail de roulement (31, 38, 39) présente, le long de sa longueur, plusieurs évidements (37) destinés à fixer les éléments de barrière lumineuse (10), dans laquelle de préférence les évidements (37) sont disposés de manière équidistante les uns par rapport aux autres et/ou s'étendent sur la totalité de la longueur de l'au moins un rail de roulement (31, 38, 39).

4. Installation de porte selon la revendication 3, dans laquelle plusieurs éléments de barrière lumineuse (10) sont fixés sur un évidement (37) respectif du rail de roulement (31, 38, 39) pour détecter une voie de déplacement libre de l'élément de porte (50) au moyen d'une grille lumineuse sur une plus grande section.

5. Installation de porte selon l'une quelconque des revendications précédentes, comprenant en outre un deuxième rail de roulement (34) destiné à guider l'élément de porte (50), dans laquelle le premier rail de roulement (32) et le deuxième rail de roulement (34) sont disposés sur différents côtés de l'élément de porte (50), et de préférence une surface formée entre les deux rails de roulement (32, 34) constitue une ouverture pouvant être recouverte avec l'au moins un élément de porte (50).

6. Installation de porte selon l'une quelconque des revendications précédentes, dans laquelle chaque élément de barrière lumineuse (10) est un élément de barrière lumineuse d'envoi (33) et/ou un élément de barrière lumineuse de réception (35), et de préférence, en cas de présence de deux rails de roulement (32, 34) sur des côtés opposés de l'élément de porte (50), seuls des éléments de barrière lumineuse d'envoi (33) sont présents sur le rail de roulement (32) d'un côté et seuls des éléments de barrière lumineuse de réception (35) correspondants sont présents sur le rail de roulement (34) de l'autre côté.

7. Installation de porte selon la revendication 6, dans laquelle une paire correspondante de l'élément de barrière lumineuse d'envoi (33) et de l'élément de barrière lumineuse de réception (35) utilise des signaux codés pour ne pas interférer avec des éléments de barrière lumineuse (10) adjacents.

8. Installation de porte selon l'une quelconque des revendications précédentes, dans laquelle
un autre rail de roulement arrière (66) est disposé à côté du premier rail de roulement avant (65) sur un côté commun de l'élément de porte (50), les deux servant à guider l'au moins un élément de porte (50), et
au moins un élément de barrière lumineuse (10) est disposé à la fois dans le rail de roulement avant (65) et dans le rail de roulement arrière (66), dans laquelle de préférence
les éléments de barrière lumineuse (10) du rail de roulement avant et du rail de roulement arrière sont reliés par l'intermédiaire d'un câble commun.

9. Installation de porte selon l'une quelconque des revendications précédentes, dans laquelle l'au moins un rail de roulement (31, 38, 39) s'étend de manière rectiligne et/ou présente une section en forme d'arc.

10. Installation de porte selon l'une quelconque des revendications précédentes, dans laquelle chaque élément de barrière lumineuse (10) dispose d'un ergot d'enclenchement, avec lequel l'élément de barrière lumineuse (10) peut être enclenché dans l'évidement (37) du rail de roulement (31, 38, 39), et/ou
présente un couvercle de serrage, qui est conçu pour serrer et raccorder un câble, en particulier un câble plat à plusieurs brins, simultanément à l'élément de barrière lumineuse.

11. Procédé destiné à définir la position de porte pour une installation de porte selon l'une quelconque des revendications précédentes, comprenant les étapes :
de détection de l'état d'un des éléments de barrière lumineuse (10) qu'il peut adopter soit sans l'élément de porte (50) soit de manière recouverte par l'élément de porte (50), dans lequel
dans le cas d'un changement d'état de l'élément de barrière lumineuse (10), la position d'agencement de l'élément de barrière lumineuse (10) concorde avec l'arête de fermeture de l'élément de porte (50) et une commande de porte fixe sur la base de cette information la position de porte.

12. Procédé selon la revendication 11, dans lequel
lorsque l'état de l'élément de barrière lumineuse (10) est libre, l'élément de porte (50) est déplacé dans la direction de fermeture jusqu'à ce que l'état de l'élément de barrière lumineuse (10) change, ou
lorsque l'état de l'élément de barrière lumineuse (10) est recouvert, l'élément de porte (50) est déplacé dans la direction d'ouverture jusqu'à ce que l'état de l'élément de barrière lumineuse (10) change, et
lors du changement de l'état, la position d'agencement de l'élément de barrière lumineuse (10) concorde avec l'arête de fermeture de l'élément de porte (50) et une commande de porte fixe sur la base de cette information la position de porte.

13. Procédé selon l'une quelconque des revendications 11 ou 12, dans lequel l'installation de porte dispose d'un premier élément de barrière lumineuse (10) et d'un deuxième élément de barrière lumineuse (10), dans lequel lors d'une procédure de fermeture normale de l'installation de porte, le deuxième élément de barrière lumineuse (10) change son état avant le premier élément de barrière lumineuse (10) de livre à recouvert, et
lorsque le premier et le deuxième élément de barrière lumineuse (10) sont libres, l'élément de porte (50) est déplacé dans la direction de fermeture jusqu'à ce que l'état du deuxième élément de barrière lumineuse (10) change,
lorsque le premier et le deuxième élément de barrière lumineuse (10) sont recouverts, l'élément de porte (50) est déplacé dans la direction d'ouverture jusqu'à ce que l'état du premier élément de barrière lumineuse (10) change, et
lorsque le premier élément de barrière lumineuse (10) est libre et le deuxième élément de barrière lumineuse (10) est recouvert, l'élément de porte (50) est déplacé dans la direction de fermeture jusqu'à ce que l'état du premier élément de barrière lumineuse (10) change ou l'élément de porte (50) est déplacé dans la direction d'ouverture jusqu'à ce que l'état du deuxième élément de barrière lumineuse (10) change.
